# EUROPÄISCHE PATENTSCHRIFT

(11) **EP 3 637 570 B1**
(45) Veröffentlichungstag und Bekanntmachung des Hinweises auf die Patenterteilung: **24.02.2021**
(21) Anmeldenummer: 18199880.8
(22) Anmeldetag: 11.10.2018
(51) Int. Cl.: H02G 3/32, G02B 6/44, H02G 11/00

(54) **LEITUNGSSTÜTZE**
LINE SUPPORT
SUPPORT DE CÂBLES

(43) Veröffentlichungstag der Anmeldung: 15.04.2020
(73) Patentinhaber: Gustav Hensel GmbH & Co. KG, 57368 Lennestadt (DE)
(72) Erfinder: Hofmann, Carsten, 57368 Lennestadt (DE); Vogt, Kevin, 57392 Schmallenberg-Lenne (DE); Zollmann, Jens, 57368 Lennestadt (DE)
(74) Vertreter: Rausch Wanischeck-Bergmann Brinkmann

(56) Entgegenhaltungen:
- EP-A2- 1 061 273
- US-A1- 2002 039 476
- US-A1- 2017 045 705
- US-B2- 7 497 718
- US-B2- 9 270 100
- Anonymous: "CABLE CARRIERS", , 31. August 2009 (2009-08-31), XP055560657, Gefunden im Internet: URL:https://www.vahleinc.com/docs/catalogs /C-Track_Festoon_Systems.pdf?r=false [gefunden am 2019-02-22]

## Beschreibung

Die vorliegende Erfindung betrifft eine Leitungsstütze für die oberflächenfreie Verlegung von Leitungen, umfassend ein Basisteil für die Montage der Leitungsstütze an einer Oberfläche, einen Leitungsführungsbereich und einen, Basisteil und Leitungsführungsbereich verbindenden Verbindungsbereich, wobei im Leitungsführungsbereich zwei Führungsbahnen mit Oberflächen angeordnet sind, welche einen Kurvenverlauf haben.

Häufig werden Leitungen, insbesondere elektrische und ganz insbesondere optoelektrische Leitungen wir Glasfaserkabel und dergleichen in abgeschlossenen Bereichen, Gehäusen usw. möglichst frei verlegt. Das heißt, sie werden nicht entlang einer Oberfläche auf dieser oder diese berührend verlegt, sondern frei von einer Oberfläche. Die Leitungen müssen zum Einen bei einer oberflächenfreien Verlegung funktionsgerecht stabil verlegt werden, das heißt, sie dürfen nicht beliebig durchhängen oder andererseits auch nicht beliebig unter Spannung stehen oder mechanische Belastungen aufnehmen müssen, zum Anderen dürfen sie beispielsweise im Falle optischer Leitungen (z.B. Lichtwellenleitungen) keine Knicke und dergleichen aufweisen, die sie funktionsuntüchtig machen.

Im Stand der Technik behilft man sich mit knopfartigen Befestigungen bzw. Umlenkrollen, die auf den oder in Oberflächen positioniert werden.

Aus der US 2002/0039476 A1 ist eine gattungsgemäße Leitungsstütze bekannt. Diese Leitungsstütze besteht aus einem als Träger ausgebildeten Basisteil für die Montage der Leitungsstütze, einem Leitungsführungsbereich zwischen zwei parallel verlaufenden Führungsbahnen, die beidseitig eines Stegs des Leitungsführungsbereichs angeordnet sind und einem, Basisteil und Leitungsstütze verbindenden Verbindungsbereich. Im Leitungsführungsbereich sind zwei Führungsbahnen mit einander zugewandten, einen Kurvenverlauf aufweisenden Oberflächen angeordnet. Diese Leitungsstütze dient der kontrollierten Führung von Kabeln mit einem bestimmten Radius, so dass das zu führende Kabel zwischen den Führungsbahnen geführt wird. Das Kabel wird seitlich zwischen die beiden Führungsbahnen eingelegt. Das Kabel wird über Halteelemente in einem Bereich zwischen den Führungsbahnen gehalten, die eine seitliche Öffnung zwischen den Führungsbahnen vollständig oder teilweise verschließen oder zumindest verkleinern. Zu diesem Zweck kann es vorgesehen sein, dass Teile der Leitungsstütze beim Einführen des Kabels oder beim Entfernen des Kabels verbogen werden müssen, was zu einer starken Belastung und ggfs. zu dauerhaften Verformungen dieser Teile führen kann, so dass deren Verwendbarkeit zumindest eingeschränkt wird.

Ausgehend vom vorbeschriebenen Stand der Technik liegt der vorliegenden Erfindung die **Aufgabe** zugrunde, eine Leitungsstütze für die oberflächenfreie Verlegung von Leitungen bereitzustellen, mit welcher die Verlegung vereinfacht und insbesondere hoch flexibel ermöglicht wird.

Zur technischen **Lösung** dieser Aufgabe wird eine Leitungsstütze mit den Merkmalen des Anspruchs 1 vorgeschlagen. Weitere Vorteile und Merkmale ergeben sich aus den Unteransprüchen.

Erfindungsgemäß umfasst eine Leitungsstütze ein Basisteil, einen Leitungsführungsbereich und einen Verbindungsbereich. Das Basisteil ist für die Montage der Leitungsstütze an einer Oberfläche vorgesehen. Der Leitungsführungsbereich weist zwei winklig zueinander angeordnete Führungsbahnen auf, welche jeweils einen Kurvenverlauf haben. Der Verbindungsbereich verbindet Basisteil und Leitungsführungsbereich. Im Verbindungsbereich ist eine als Schlitz ausgebildete Einführkulisse für eine Leitung ausgebildet, welcher Schlitz an einer freien Außenkante des Verbindungsbereiches offen ist und in einer Position endet, die auf den Oberflächen beider, einen gemeinsamen Berührungspunkt aufweisenden Führungsbahnen liegt, wobei der Schlitz an dem Berührungspunkt endet.

In einfachster Weise kann der Leitungsführungsbereich seitlich an einem stegförmigen oder stabartigen Verbindungsbereich angeordnet sein.

Im bestimmungsgemäßen Funktionszustand kann die Leitung über den kurvenförmigen Leitungsführungsbereich geführt werden, ohne irgendwelche Störhindernisse entlang der Kurvenbahn.

Die Kurvenbahnen können gemäß einem vorteilhaften Vorschlag der Erfindung Kreissegmente sein oder alle erforderlichen oder gewünschten Rundungen aufweisen, elliptische Segmente oder dergleichen. Auch Abknickungen können vorgesehen sein, wenn die entsprechende Leitung dies ermöglicht.

Die wenigstens zwei Führungsbahnen sind aneinander angeordnet, um auf diese Weise parallel genutzt zu werden. Dabei können die Kurven in beliebiger Lage zueinanderstehen. Der Basisteil weist einen Montagesockel auf. Dieser kann Schraubbohrungen oder Klemmbolzen-Ansätze aufweisen oder sonstige Befestigungsmöglichkeiten bereitstellen.

Die Führungskulisse im Verbindungsbereich ist ein Schlitz, welcher an einer Außenkante des Verbindungsbereiches offen ist und auf den Oberflächen der Führungsbahnen endet. Der Schlitz endet an einer Position, die auf den Oberflächen beider Führungsbahnen liegt.

Die Führungsbahnen können eine zum Basisteil konvex weisende Führungsfläche aufweisen und beispielsweise eine kerbenartige Führung für eine Leitung bereithalten. Alternativ oder zusätzlich können auch seitliche Rutschsicherungen ausgebildet sein.

Gemäß einem vorteilhaften Vorschlag der Erfindung ist vorgesehen, dass im Bereich der Leitungsführungsbereiche Befestigungspunkte für Sicherungsmittel vorgesehen sind. Dies können beispielsweise Einkerbungen sein, in welche elastische Bänder oder dergleichen einsetzbar sind.

Der Verbindungsbereich kann verdrehbar, verschwenkbar oder sonst wie beweglich gelenkig ausgebildet sein. So ist es möglich, einen Winkel zum Basisteil und/oder zur Führungsbahn auszubilden oder beispielsweise die Lage der Führungsbahn zu verdrehen, zu verschwenken usw.

Mit der Erfindung wird eine einfach aufgebaute Leitungsstütze für die oberflächenfreie Verlegung von Leitungen bereitgestellt, welche eine vereinfachte und sichere Verlegung ermöglicht.

So können beispielsweise Lichtleiter als Flamm- oder Blitzsensor über Flächen verlegt werden, wobei sie jedoch frei von Oberflächen angeordnet sein können.

Weitere Vorteile und Merkmale der Erfindung ergeben sich aus der folgenden Beschreibung anhand der Figuren. Dabei zeigen:
- Fig. 1: eine perspektivische Darstellung für ein Ausführungsbeispiel einer erfindungsgemäßen Leitungsstütze;
- Fig. 2: eine Darstellung gemäß Fig. laus einer anderen Perspektive und
- Fig. 3: eine Darstellung eines vereinfachten, weiteren Ausführungsbeispiels für eine erfindungsgemäße Leitungsstütze.

In den Figuren sind gleiche Elemente mit gleichen Bezugszeichen versehen.

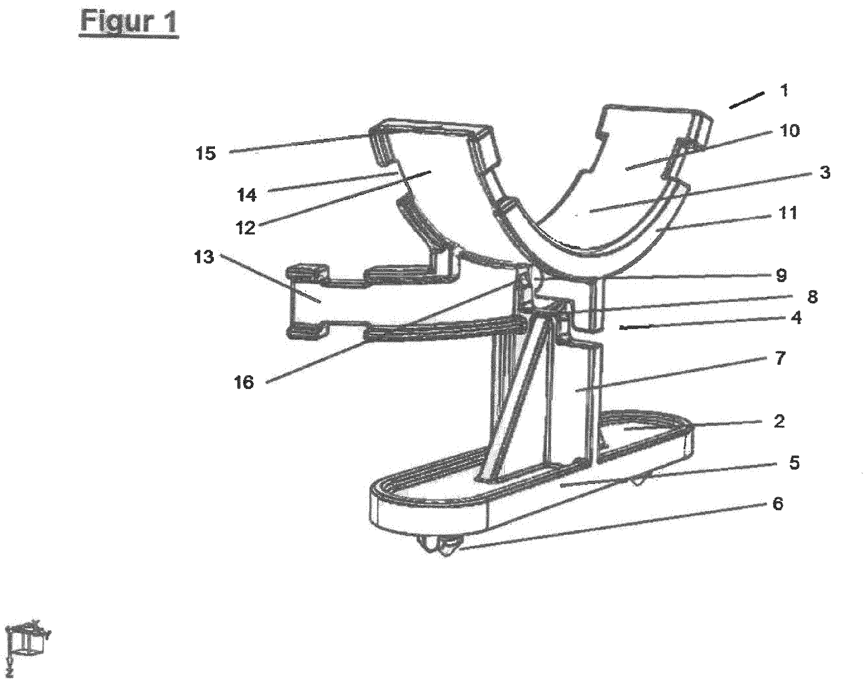

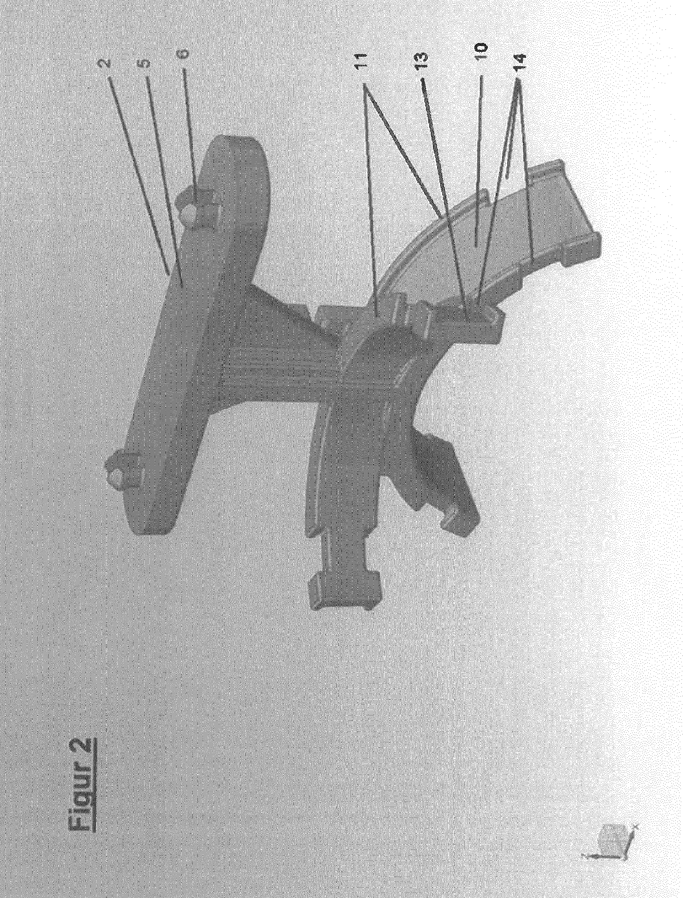

Die Figuren 1 und 2 zeigen eine Leitungsstütze 1. Diese hat einen Basisteil 2, einen Leitungsführungsbereich 3 sowie einen Verbindungsbereich 4.

Der Basisbereich 2 ist im gezeigten Ausführungsbeispiel ein Anschlussflansch 5, welcher Klemmbolzenanschlussstücke 6 an der freien Oberfläche aufweist. An der gegenüberliegenden Oberfläche ist ein Verbindungsbereich 7 aufgesetzt, welcher im gezeigten Ausführungsbeispiel ein abgestützter Steg ist. Dieser weist einen Einführschlitz auf, welcher von einer freien Außenkante über einen Kulissenweg zu einem inneren Endpunkt 9 führt. Dieser Endpunkt 9 liegt im gemeinsamen Schnittpunkt zwischen zwei Leitungsführungsbereichen 10 und 13. Ein Leitungsführungsbereich 10 ist ein Kreissegment, welcher konvex in Richtung Verbindungsbereich bzw. Basiselement 2 gebogen verläuft. Die Führungsoberfläche 12 ist seitlich durch Abkantungen 11 abgegrenzt, sodass eine aufgelegte Leitung nicht seitlich verrutschen kann. Ausklinkungen 14 ermöglichen das Aufsetzen von Spannmitteln als Sicherung, beispielsweise Gummiringen und dergleichen, die sekantenartig die Kurve des Leitungsführungselementes 10 überspannen und dabei ein auf der Führungsbahn 12 aufliegendes Leitungselement absichern. Am Ein- und Austrittsbereich 15 einer entsprechenden Führungsbahn 12 kann eine Leitung hindernisfrei einlaufen.

Die gleichen Ausbildungen gelten für den Führungsbahnbereich 13.

Im Bereich 16 der Öffnung 9 kann eine Leitung eingesetzt werden, die entweder über die Führungsbahn 12 oder Führungsbahn 13 verlaufend positioniert werden kann.

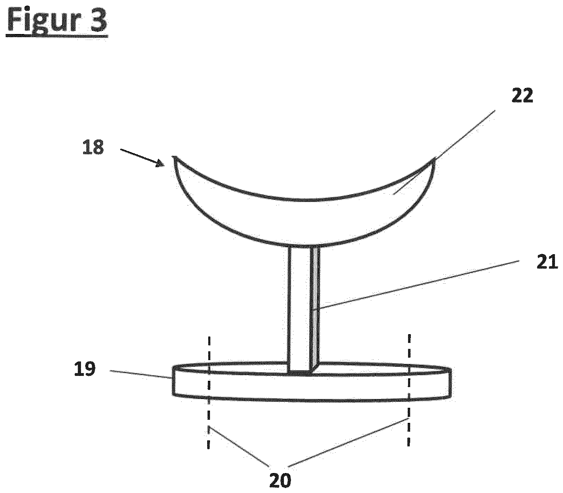

In dem vereinfacht dargestellten Ausführungsbeispiel gemäß Figur 3 ist eine Leitungsstütze 18 gezeigt, bei welcher ein Basissockel 19 über Schraublöcher 20 verfügt. Ein einfacher Steg 21 ist auf dem Basissockel 19 aufgesetzt und trägt am freien Ende eine Führungsbahn 22, in der Art wie in den Figuren 1 und 2 gezeigt. Diese ist einfach seitlich an den Steg 21 angesetzt und somit frei zugänglich. Es versteht sich von selbst, dass hieran wiederum weitere Führungsbahnen angeordnet sein können.

Die bestehenden Ausführungsbeispiele dienen nur der Erläuterung und sind nicht beschränkend.

### Bezugszeichenliste

- 1: Leitungsstütze
- 2: Basisteil
- 3: Leitungsführungsbereich
- 4: Verbindungsbereich
- 5: Sockel
- 6: Klemmbolzen
- 7: Steg
- 8: Einführschlitz
- 9: Schlitzende
- 10: Kurvenelement
- 11: Seitenkante
- 12: Führungsbahn
- 13: Führungsbahn
- 14: Ausklinkung
- 15: Eintritts-/Austrittsende
- 16: Berührungspunkt
- 18: Leitungsstütze
- 19: Basisbereich
- 20: Schraublöcher
- 21: Steg
- 22: Führungsbahn

## Patentansprüche

1. Leitungsstütze für die oberflächenfreie Verlegung von Leitungen, umfassend ein Basisteil (2) für die Montage der Leitungsstütze (1) an einer Oberfläche, einen Leitungsführungsbereich (3) und einen, Basisteil (2) und Leitungsführungsbereich (3) verbindenden Verbindungsbereich (7), wobei im Leitungsführungsbereich (3) zwei winklig zueinander angeordnete Führungsbahnen (12, 13) mit Oberflächen angeordnet sind, welche einen Kurvenverlauf haben, wobei im Verbindungsbereich (7) eine als Schlitz (8) ausgebildete Einführkulisse für eine Leitung ausgebildet ist, welcher Schlitz (8) an einer freien Außenkante des Verbindungsbereiches (7) offen ist und in einer Position endet, die auf den Oberflächen beider, einen gemeinsamen Berührungspunkt aufweisenden Führungsbahnen (12, 13) liegt, wobei der Schlitz (8) an dem Berührungspunkt endet.

2. Leitungsstütze nach Anspruch 1, **dadurch gekennzeichnet, dass** das Basisteil (2) einen Montagesockel aufweist.

3. Leitungsstütze nach Anspruch 2, **dadurch gekennzeichnet, dass** der Montagesockel (2) Schraubbohrungen (20) aufweist.

4. Leitungsstütze nach einem der Ansprüche 2 oder 3, **dadurch gekennzeichnet, dass** der Montagesockel einen Klemmbolzen-Ansatz aufweist.

5. Leitungsstütze nach einem der vorhergehenden Ansprüche, **dadurch gekennzeichnet, dass** der Verbindungsbereich (7) aus wenigstens zwei gegeneinander relativbeweglichen Teilbereichen gebildet ist.

6. Leitungsstütze nach Anspruch 5, **dadurch gekennzeichnet, dass** die Teilbereiche zueinander verdrehbar sind.

7. Leitungsstütze nach einem der Ansprüche 5 oder 6, **dadurch gekennzeichnet, dass** die Teilbereiche zueinander verschwenkbar sind.

8. Leitungsstütze nach einem der vorhergehenden Ansprüche, **dadurch gekennzeichnet, dass** die Führungsbahn (12, 13) kreissegmentartig ausgebildet ist.

9. Leitungsstütze nach einem der vorhergehenden Ansprüche, **dadurch gekennzeichnet, dass** die Führungsbahn (12, 13) eine zum Basisteil konvex weisende Führungsfläche aufweist.

10. Leitungsstütze nach Anspruch 9, **dadurch gekennzeichnet, dass** die Führungsfläche an Seitenkanten Rutschsicherungen aufweist.

11. Leitungsstütze nach Anspruch 10, **dadurch gekennzeichnet, dass** die Rutschsicherungen durch Aufkantungen (11) gebildet sind.

12. Leitungsstütze nach einem der vorhergehenden Ansprüche, **dadurch gekennzeichnet, dass** die Führungsbahn (12, 13) Befestigungsbereiche für Sicherungsmittel aufweist.

13. Leitungsstütze nach Anspruch 12, **dadurch gekennzeichnet, dass** die Befestigungsbereiche durch Ausklinkungen (14) gebildet sind.

## Claims

1. A line support for the surface-free installation of lines, comprising a base part (2) for installing the line support (1) on a surface, a cable routing area (3) and a connection area (7), which connects the base part (2) and the cable routing area (3), wherein two guide tracks (12, 13), which are arranged at an angle to each other and which have surfaces, are arranged in the cable routing area (3), which guide tracks comprise a curve shape, wherein an insertion arrangement configured as a slot (8) for a line is formed in the connection area (7), which slot (8) is open on a free external edge of the connection area (7) and ends at a position, which is placed on the surfaces of both guide tracks (12, 13) comprising a common contact point, wherein the slot (8) ends at the contact point.

2. A line support according to claim 1, **characterized in that** the base part (2) comprises a mounting base.

3. A line support according to claim 2, **characterized in that** the mounting base (2) comprises screw holes (20).

4. A line support according to one of the claims 2 or 3, **characterized in that** the mounting base comprises a clamping bolt extension.

5. A line support according to one of the preceding claims, **characterized in that** the connection area (7) is formed by at least two partial areas, which can be relatively displaced with respect to each other.

6. A line support according to claim 5, **characterized in that** the partial areas can be rotated with respect to each other.

7. A line support according to one of the claims 5 or 6, **characterized in that** the partial areas can be pivoted with respect to each other.

8. A line support according to one of the preceding claims, **characterized in that** the guide track (12, 13) is formed like a segment of a circle.

9. A line support according to one of the preceding claims, **characterized in that** the guide track (12, 13) comprises a guiding surface, which is directed in a convex manner towards the base part.

10. A line support according to claim 9, **characterized in that** the guiding surface comprises slide protections at lateral edges.

11. A line support according to claim 10, **characterized in that** the slide protections are formed by folded edges (11).

12. A line support according to one of the preceding claims, **characterized in that** the guide track (12, 13) comprises fastening areas for securing devices.

13. A line support according to claim 12, **characterized in that** the fastening areas are formed by notches (14).

## Revendications

1. Support de câbles pour la pose de câbles sans surface, comprenant une partie de base (2) pour le montage du support de câbles (1) sur une surface, une zone de tracé de conduites (3) et une zone de liaison (7), qui relie la partie de base (2) et la zone de tracé de conduites (3), dans lequel deux rails de guidage (12, 13) disposés à un angle l'un par rapport à l'autre et comprenant des surfaces sont disposés dans la zone de tracé de conduites (3), lesquels rails de guidage s'étendent en forme d'une courbe, dans lequel une coulisse d'insertion configurée sous forme d'une fente (8) pour une conduite est formée dans la zone de liaison (7), laquelle fente (8) est ouverte sur un bord extérieur libre de la zone de liaison (7) et se termine dans une position, qui se trouve sur les surfaces des eux rails de guidage (12, 13) comprenant un point de contact commun, la fente (8) se terminant au point de contact.

2. Support de câbles selon la revendication 1, **caractérisé en ce que** la partie de base (2) comprend un socle de montage.

3. Support de câbles selon la revendication 2, **caractérisé en ce que** le socle de montage (2) comprend des trous pour vis (20).

4. Support de câbles selon l'une des revendications 2 ou 3, **caractérisé en ce que** le socle de montage comprend un embout de boulon de serrage.

5. Support de câbles selon l'une des revendications précédentes, **caractérisé en ce que** la zone de liaison (2) est formée par au moins deux zones partielles relativement mobiles l'une par rapport à l'autre.

6. Support de câbles selon la revendication 5, **caractérisé en ce que** les zones partielles peuvent être tournées l'une par rapport à l'autre.

7. Support de câbles selon l'une des revendications 5 ou 6, **caractérisé en ce que** les zones partielles peuvent être pivotées l'une par rapport à l'autre.

8. Support de câbles selon l'une des revendications précédentes, **caractérisé en ce que** le rail de guidage (12, 13) est configuré sous forme d'un arc de cercle.

9. Support de câbles selon l'une des revendications précédentes, **caractérisé en ce que** le rail de guidage (12, 13) comprend une surface de guidage dirigée de manière convexe vers la partie de base.

10. Support de câbles selon la revendication 9, **caractérisé en ce que** la surface de guidage comprend des protections antiglisse sur les bords latéraux.

11. Support de câbles selon la revendication 10, **caractérisé en ce que** les protections antiglisse sont formées par des bords repliés (11).

12. Support de câbles selon l'une des revendications précédentes, **caractérisé en ce que** le rail de guidage (12, 13) comprend des zones de fixation pour des moyens de fixation.

13. Support de câbles selon la revendication 12, **caractérisé en ce que** les zones de fixation sont formées par des encoches (14).
